# EUROPÄISCHE PATENTSCHRIFT

(11) **EP 2 987 222 B1**
(45) Veröffentlichungstag und Bekanntmachung des Hinweises auf die Patenterteilung: **24.10.2018**
(21) Anmeldenummer: 14755641.9
(22) Anmeldetag: 19.08.2014
(51) Int. Cl.: H02J 9/06, H02M 3/335, H02J 1/10, G06F 1/32

(54) **NETZTEILANORDNUNG FÜR EIN ELEKTRONISCHES GERÄT**
POWER SUPPLY ARRANGEMENT FOR AN ELECTRONIC DEVICE
ENSEMBLE BLOC D'ALIMENTATION ÉLECTRIQUE POUR APPAREIL ÉLECTRONIQUE

(30) Priorität: 19.05.2014 DE 102014107019
(43) Veröffentlichungstag der Anmeldung: 24.02.2016
(73) Patentinhaber: Fujitsu Technology Solutions Intellectual Property GmbH, 80807 München (DE)
(72) Erfinder: BUSCH, Peter, 86179 Augsburg (DE); STERZIK, Willi, 86169 Augsburg (DE)
(74) Vertreter: Epping - Hermann - Fischer
(86) Internationale Anmeldenummer: PCT/EP2014/067671
(87) Internationale Veröffentlichungsnummer: WO 2015/176781

(56) Entgegenhaltungen:
- WO-A2-2012/087618
- DE-A1-102010 035 112
- DE-T5-112007 000 698
- US-A- 6 127 815
- US-A1- 2003 231 012
- US-A1- 2010 164 292
- US-A1- 2011 096 063

## Beschreibung

Die vorliegende Erfindung betrifft eine Netzteilanordnung für ein elektronisches Gerät wie insbesondere einen Computer. Insbesondere betrifft die Anmeldung eine Netzteilanordnung umfassend einen ersten Schaltwandler mit einem ersten Regelkreis zum Bereitstellen einer geregelten Ausgangsspannung und einen zweiten Schaltwandler mit einem zweiten Regelkreis zum alternativen Bereitstellen der geregelten Ausgangsspannung.

Netzteilanordnungen mit zwei Schaltwandlern zum alternativen Bereitstellen einer geregelten Ausgangsspannung sind aus dem Stand der Technik bekannt. Sie dienen, unter anderem, zur redundanten Stromversorgung oder zur Versorgung eines elektronischen Gerätes mit unterschiedlichen Leistungsaufnahmen in unterschiedlichen Betriebszuständen.

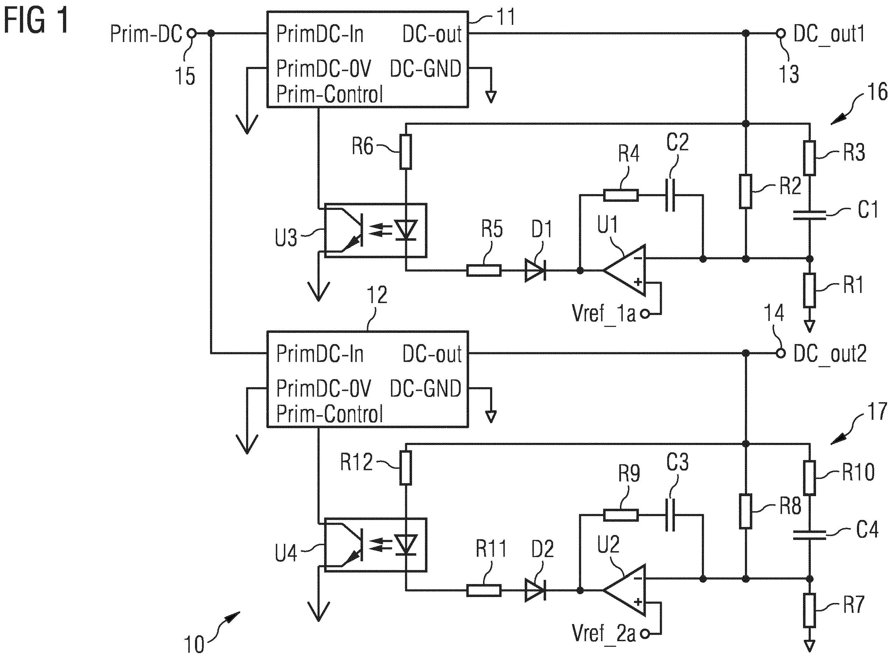

Figur 1 zeigt eine solche Netzteilanordnung 10 mit einem ersten Schaltwandler 11 und einem zweiten Schaltwandler 12. Der erste Schaltwandler 11 stellt eine geregelte Ausgangsspannung, beispielsweise eine geregelte Gleichspannung DC-out1 an einem ersten Ausgang 13 der Netzteilanordnung 10 zur Verfügung. Der zweite Schaltwandler 12 stellt in äquivalenter Weise eine zweite Ausgangsspannung, beispielsweise eine geregelte Gleichspannung DC-out2 an einem zweiten Ausgang 14 zur Verfügung. Beide Schaltwandler 11 und 12 werden von einem Eingang 15 aus mit einer gemeinsamen Versorgungsspannung, beispielsweise einer gleichgerichteten Zwischenspannung Prim-DC versorgt.

Im Ausführungsbeispiel handelt es sich bei dem ersten Schaltwandler 11 und dem zweiten Schaltwandler 12 jeweils um einen so genannten DC/DC-Konverter, der basierend auf einer Amplitude eines Steuersignals Prim-Control die Höhe der am Ausgang 13 beziehungsweise 14 abgegebenen Spannung einstellt. Zu dessen Regelung umfasst die Netzteilanordnung 10 gemäß Figur 1 auf der Sekundärseite einen ersten Regelkreis 16 für den ersten Schaltwandler 11 sowie einen zweiten Regelkreis 17 für den zweiten Schaltwandler 12. Über den Regelkreis 16 wird die Spannung am ersten Ausgang 13 in Abhängigkeit einer vorgegebenen Referenzspannung Vref_1a auf einen vorbestimmten Wert geregelt. Äquivalent wird die Spannung am zweiten Ausgang 14 unter Verwendung einer zweiten Referenzspannung Vref_2a durch den zweiten Regelkreis 17 auf einen vorbestimmten Wert geregelt.

In Abhängigkeit des durch die Netzteilanordnung 10 versorgten Gerätes können die Ausgangsspannungen DC-out1 und DC-out2 entweder gleich groß sein oder unterschiedlich groß sein. Beispielsweise ist es möglich, an beiden Ausgängen 13 und 14 eine Spannung von 12 V bereitzustellen. In der beschriebenen Anordnung stellt der zweite Schaltwandler 12 des Weiteren eine primäre Hilfsspannung zum Betrieb der beiden Schaltwandler 11 und 12 bereit.

Problematisch in der anhand der Figur 1 beschriebenen Netzteilanordnung 10 ist unter anderem, dass die Schaltwandler 11 und 12 sowie die zugehörigen Regelkreise 16 und 17 in der Regel auch dann mit einer Betriebsspannung versorgt werden müssen, wenn ein an den Ausgängen 13 oder 14 angeschlossenes elektronisches Gerät keine Leistung von dem jeweiligen Schaltwandler 11 beziehungsweise 12 aufnimmt. Handelt es sich bei dem ersten Schaltwandler 11 beispielsweise um einen Hauptwandler zum Betrieb eines Computers in einem normalen Betriebszustand und bei dem zweiten Schaltwandler 12 um einen Hilfswandler zum Bereitstellen einer Betriebsspannung für einen Energiesparmodus, verbraucht der erste Schaltwandler 11 und der zugehörige Regelkreis 16 selbst in dem Energiesparmodus des Computers stets eine geringe Menge an Energie.

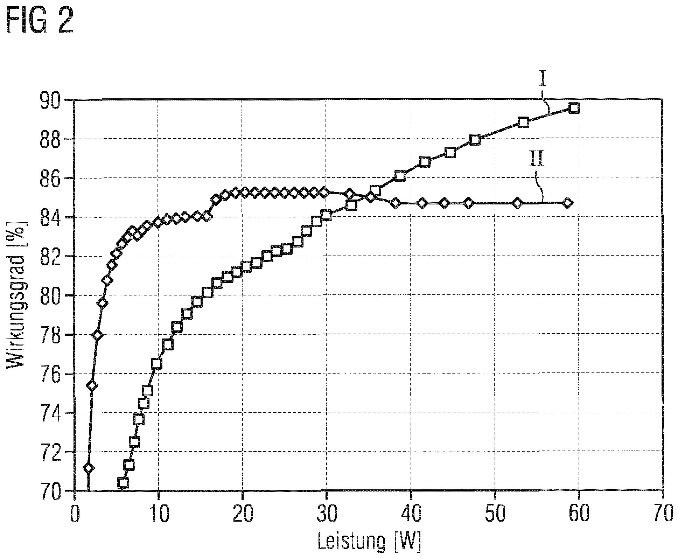

Ein weiteres Problem liegt darin, dass einer oder beide Schaltwandler oftmals mit einer verhältnismäßig geringen Ausgangsleistung betrieben werden, die deutlich unter dessen Nennausgangsleistung liegt. Die Energieeffizienz von Schaltnetzteilen, umfassend einen oder mehrere Schaltwandler, hängt unter anderem von der Ausgangsleistung der Schaltwandler ab. Dieser Zusammenhang ist anschaulich in der Figur 2 dargestellt.

Figur 2 zeigt Wirkungsgradverläufe I und II des ersten und zweiten Schaltwandlers 11 beziehungsweise 12 gemäß der Figur 1. Auf der Abszisse ist die Leistung in Watt [W] eingetragen, während auf der Ordinate der Wirkungsgrad in Prozent [%] eingetragen ist. Der Wirkungsgradverlauf I beschreibt den Wirkungsgradverlauf der ersten Wandlerschaltung 3, während der Wirkungsgradverlauf II den Wirkungsgradverlauf der zweiten Wandlerschaltung 4 darstellt. Es ist insbesondere zu erkennen, dass der Wirkungsgrad und somit die Energieeffizienz von Schaltnetzteilen mit zunehmender Ausgangsbelastung zunimmt. Gerade Computer und andere Geräte der Informationstechnologie werden dabei häufig über einen längeren Zeitraum in einem Schwachlastbereich weit unter der maximalen Ausgangsleistung der verwendeten Schaltwandler betrieben.

Aus Figur 2 ist ersichtlich, dass der erste Schaltwandler 11 (Verlauf I) für einen Leistungsverbrauch ab z.B. 35 Watt günstig erscheint, während der zweite Schaltwandler 12 (Verlauf II) für eine Leistungsaufnahme von z.B. 0 Watt bis 35 Watt günstiger erscheint. Das bedeutet, dass sich beide Wirkungsgradverläufe I und II in einem Punkt bei zirka 35 Watt Ausgangsleistung schneiden. In einem Niedrig- oder Schwachlastbereich wäre somit der Betrieb des zweiten Schaltwandlers 12 (Verlauf II) vorteilhaft, während in einem normalen oder Starklastbereich der Betrieb des ersten Schaltwandlers 11 (Verlauf I) vorteilhaft wäre.

Zur Verbesserung der Energieeffizienz von Netzteilen offenbart die deutsche Patentanmeldung DE 10 2010 035 112 A1 eine Regelschaltung für ein Hilfsnetzteil, umfassend einen Regelkreis zur Regelung eines Spannungswandlers des Hilfsnetzteils über eine Regelgröße auf eine Sollspannung. Dabei umfasst der Regelkreis eine Zusatzschaltung, die dazu eingerichtet ist, eine Veränderung der Regelgröße beim Bereitstellen einer externen Spannung einer anderen Spannungsquelle an einem ersten Ausgang zur Abgabe der von dem Hilfsnetzteil erzeugten Spannung zu begrenzen, wenn die externe Spannung die Sollspannung des Hilfsnetzteils übersteigt.

Die bekannte Schaltung ermöglicht die Abgabe einer Versorgungsspannung zweier unterschiedlicher Schaltwandler an einem gemeinsamen Ausgang. Auf diese Weise kann eine verbraucherseitig erforderliche elektrische Leistung wahlweise von einem Hilfsnetzteil oder einem Hauptnetzteil bereitgestellt werden, so dass die jeweiligen Netzteile bevorzugt in einem Bereich mit verhältnismäßig großer Energieeffizienz betrieben werden können. In der bekannten Netzteilanordnung wird das Hilfsnetzteil durch eine Zusatzschaltung in einem aktiven Zustand gehalten, um einen plötzlichen Spannungseinbruch beim Abschalten des Hauptnetzteils zu verhindern. Nachteilig an der bekannten Schaltung ist, dass bei einer schlagartigen Lastanhebung der Wandler des Hauptnetzteils nicht schnell genug hochfährt und damit das Hilfsnetzteil überlastet wird und gegebenenfalls abschaltet.

Die DE 112007000698 T5 beschreibt eine Vorrichtung umfassend ein Stromversorgungsmodul mit einer Vielzahl von Stromversorgungsuntermodulen, wobei jedes Stromversorgungsuntermodul eine Höchsteffizienz bei einer anderen Betriebsbedingung aufweist. Je nach Bedarf können einzelne oder Kombinationen von Stromversorgungsuntermodulen an- oder abgeschaltet werden.

Die US 2003/0231012 A1 beschreibt einen Spannungsregler mit einer ersten und einer zweiten Rückkoppelschleife. Die erste Rückkoppelschleife stellt einen Strom durch eine Induktionsschleife des Spannungsreglers auf einen vorbestimmten Wert ein. Die zweite Rückkoppelschleife bestimmt den vorbestimmten Wert als eine Funktion einer Fehlerspannung. Die zweite Rückkoppelschleife umfasst einen zwischen zweiter Rückkoppelschleife und Masse geschalteten Kondensator. In einer Ausgestaltung kann der Kondensator in einem stand-by Zustand von der zweiten Rückkoppelschleife getrennt und auf eine vorbestimmte Spannung aufgeladen werden.

Die US 6,127,815 zeigt einen Schaltwandler mit einem normalen und einem stand-by Betriebszustand. In dem stand-by Betriebszustand wird ein Fehlerverstärker eines Regelkreises des Schaltwandlers in einem Zustand geringer Leistung betrieben. Der Regelkreis ist mit einem Filterkreis verbunden, in dem ein Kondensator zwischen den Regelkreis und Masse eingeschaltet ist. In dem stand-by Betriebszustand wird der Filterkreis von dem Regelkreis getrennt und der Kondensator des Filterkreises auf eine vorbestimmte Spannung aufgeladen.

Aufgabe der vorliegenden Erfindung ist es, eine verbesserte Netzteilanordnung zu beschreiben, die eine sichere und effiziente Versorgung eines Verbrauchers mit einer geregelten Ausgangsspannung in einem Schwachlastbereich ermöglicht. Bevorzugt soll die Netzteilanordnung eine besonders hohe Energieeffizienz über einen relativ breiten Ausgangsleistungsbereich aufweisen. Dabei soll die Netzteilanordnung nicht auf die Bereitstellung externer Steuersignale, beispielsweise durch das von ihr versorgte Gerät, angewiesen sein.

Die oben genannte Aufgabe wird durch eine gattungsgemäße Netzteilanordnung mit einem ersten Schaltwandler und einem zweiten Schaltwandler gelöst. Darin ist eine mit dem ersten Regelkreis und dem zweiten Regelkreis verbundene Steuerschaltung vorgesehen, wobei die Steuerschaltung dazu eingerichtet ist, bei einem Umschalten der Stromversorgung von dem ersten Schaltwandler auf den zweiten Schaltwandler, einen vorbestimmten Regelzustand des ersten Regelkreises einzustellen und den ersten Schaltwandler zu deaktivieren und, bei einem Umschalten der Stromversorgung von dem zweiten Schaltwandler auf den ersten Schaltwandler, den ersten Schaltwandler unter Verwendung des vorbestimmten Regelzustands zu reaktivieren.

Eine derartige Netzteilanordnung erlaubt die direkte Parallelschaltung von zwei Schaltwandlern, ohne Zwischenschaltung weiterer Komponenten wie etwa einer Einkoppeldiode. Durch das Deaktivieren des ersten Schaltwandlers kann eine Störung des zweiten Schaltwandlers vermieden werden. Gleichzeitig kann durch das Einstellen beziehungsweise Setzen eines vorbestimmten Regelzustands unmittelbar vor der Deaktivierung eines Schaltwandlers und der nachfolgenden Reaktivierung unter Verwendung des vorbestimmten Regelzustands desselben Schaltwandlers ein Umschaltvorgang zwischen dem zweitem und dem ersten Schaltwandler besonders schnell durchgeführt werden. Die schnelle Umschaltung vermeidet eine Überlastung des zweiten Netzteils. Somit kann die Netzteilanordnung jeweils mit dem am besten geeigneten Schaltwandler betrieben werden, was beispielsweise zur Verbesserung ihrer Energieeffizienz ausgenutzt werden kann.

In wenigstens einer Ausgestaltung ist die Steuerschaltung des Weiteren dazu eingerichtet, bei einem Umschalten der Stromversorgung von dem zweiten Schaltwandler auf den ersten Schaltwandler, einen vorbestimmten Regelzustand des zweiten Regelkreises einzustellen und den zweiten Schaltwandler nachfolgend zu deaktivieren und, bei einem Umschalten der Stromversorgung von dem ersten Schaltwandler auf den zweiten Schaltwandler, den zweiten Schaltwandler unter Verwendung des vorbestimmten Regelzustandes zu reaktivieren. In der genannten Ausgestaltung wird eine im Wesentlichen symmetrische Anordnung von zwei Schaltwandlern verwendet, die wechselseitig zur Versorgung eines Knotenpunkts mit einer geregelten Ausgangsspannung verwendet werden. Dabei wird jeweils ein Regelzustand des aktuell nicht verwendeten Schaltwandlers vordefiniert, so dass bei einem Lastwechsel von dem ersten Schaltwandler zu dem zweiten Schaltwandler oder umgekehrt ein besonders schnelles Umschalten möglich ist.

In wenigstens einer Ausgestaltung umfasst die Steuerschaltung eine Strommessschaltung zum Vergleich eines Ausgangsstroms an einem Ausgang der Netzteilanordnung zum Bereitstellen der geregelten Ausgangsspannung mit wenigstens einem vorbestimmten Grenzwert. Dabei ist eine erste Nennausgangsleistung des ersten Schaltwandlers größer als eine zweite Nennausgangsleistung des zweiten Schaltwandlers und die Steuerschaltung ist dazu eingerichtet, nach einem Unterschreiten des Ausgangsstroms unter den vorbestimmten Grenzwert die Stromversorgung von dem ersten Schaltwandler auf den zweiten Schaltwandler umzuschalten und unmittelbar nach einem Überschreiten des Ausgangsstroms über den vorbestimmten Grenzwert die Stromversorgung von dem zweiten Schaltwandler auf den ersten Schaltwandler umzuschalten. Durch die Messung und den Vergleich eines Ausgangsstroms mit einem vorbestimmten Grenzwert kann in Abhängigkeit einer von dem Gerät aufgenommenen Ausgangsleistung entweder der erste Schaltwandler mit einer größeren Nennausgangsleistung oder der zweite Schaltwandler mit einer kleineren Nennausgangsleistung zur Bereitstellung der Versorgungsspannung verwendet werden. Dies berücksichtigt insbesondere die Erkenntnis, dass Schaltwandler mit unterschiedlicher Nennleistungen ihr Wirkungsgradmaximum typischerweise bei unterschiedlichen Ausgangsleistungen besitzen. Durch die Steuerschaltung wird bewirkt, dass jeweils ein Schaltwandler in einem günstigen Bereich seiner Nennausgangsleistung betrieben wird, so dass die Energieeffizienz der Netzteilanordnung insgesamt über einen breiten Versorgungsleistungsbereich gewährleistet ist.

Gemäß unterschiedlichen Ausgestaltungen kann die Umschaltung von dem ersten Schaltwandler auf den zweiten Schaltwandler entweder unmittelbar nach Erkennen eines Unterschreitens eines vorbestimmten Grenzwertes oder nach einer vorbestimmten Zeitspanne nach dem Erkennen eines Unterschreitens durchgeführt werden. Gemäß der ersten Alternative wird ein vorübergehender Leerlauf des ersten Schaltwandlers weitgehend vermieden. Gemäß der zweiten Alternative kann die Anzahl der Umschaltvorgänge zwischen dem ersten und zweiten Schaltwandler bei kurzzeitigen Lasteinbrüchen reduziert werden.

In wenigstens einer Ausgestaltung weist der erste Regelkreis und/oder der zweite Regelkreis ein Regelelement mit einem Rückkoppelpfad umfassend wenigstens einem zeitbestimmenden Element auf. Dabei ist die Steuerschaltung dazu eingerichtet, im gehaltenen Zustand eine elektrische Regelgröße, insbesondere eine Ladung eines als zeitbestimmenden Elements verwendeten Kondensators, zu erhalten. Durch die genannten Merkmale können an sich bekannte Regelkreise, wie insbesondere Regelverstärker mit einem kapazitiven Element, auf einfache Weise in einem vorbestimmten Zustand gehalten werden. Wird beispielsweise die Ladung eines als zeitbestimmendes Element verwendeten Kondensators auf einem vorbestimmten Spannungsniveau gehalten, kann der Regelzustand des Regelkreises insgesamt mit einem sehr niedrigen Stromverbrauch aufrecht erhalten werden.

In wenigstens einer Ausgestaltung umfasst die Steuerschaltung hierzu wenigstens ein erstes Umschaltelement, wobei das wenigstens eine erste Umschaltelement zum wahlweisen Verbinden des zeitbestimmenden Elements mit wenigstens einem Anschluss des Regelelements oder einer vorbestimmten Referenzspannung eingerichtet ist. Durch die Vorsehung von einem oder mehreren Umschaltelementen kann das zeitbestimmende Element entweder mit dem normalen Regelkreis oder mit einer vorbestimmten Referenzspannung verbunden werden.

In wenigstens einer Ausgestaltung umfasst die Steuerschaltung wenigstens ein zweites Umschaltelement, wobei das zweite Umschaltelement zum wahlweisen Verbinden eines Steuereingangs der ersten und/oder zweiten Schaltwandlers mit einem Ausgang des Regelelements oder einem vorbestimmten Spannungspotential zum Deaktivieren der ersten beziehungsweise zweiten Schaltwandlers eingerichtet ist. Durch die Vorsehung eines zweiten Umschaltelements kann insbesondere der Steuereingang eines Schaltwandlers auf ein vorbestimmtes Spannungspotential, wie insbesondere Masse, gezogen werden, um den zugehörigen Schaltwandler in Zeiten der Inaktivität möglichst vollständig zu deaktivieren.

In unterschiedlichen Ausgestaltungen handelt es sich bei dem Regelelement beispielsweise um einen gegengekoppelten Operationsverstärker oder eine gegengekoppelte, regelbare Zenerdiode.

In wenigstens einer Ausgestaltung umfasst die Netzteilanordnung des Weiteren wenigstens ein mit dem Knotenpunkt verbundenes Stabilisierungselement, insbesondere ein Speicherkondensator, zum Stabilisieren der Spannung an dem Knotenpunkt bei ausgangsseitigen Laständerungen.

Weitere vorteilhafte Ausgestaltungen der Erfindung sind in den angehängten Patentansprüchen sowie der ausführlichen Beschreibung von Ausführungsbeispielen offenbart. Die Erfindung wird nachfolgend anhand unterschiedlicher Ausführungsbeispiele unter Bezugnahme auf die angehängten Figuren im Detail beschrieben. Darin werden zum besseren Verständnis gleichartige Elemente mit gleichen Bezugszeichen versehen. In den Figuren zeigen:
- Figur 1: eine bekannte Netzteilanordnung mit zwei unabhängigen Schaltwandlern,
- Figur 2: die Energieeffizienz von zwei Schaltwandler in Abhängigkeit ihrer Ausgangsleistung,
- Figur 3: eine Netzteilanordnung gemäß einem ersten Ausführungsbeispiel der Erfindung,
- Figur 4: eine Netzteilanordnung gemäß einem zweiten Ausführungsbeispiel der Erfindung und
- Figur 5: eine Netzteilanordnung gemäß einem dritten Ausführungsbeispiel der Erfindung.

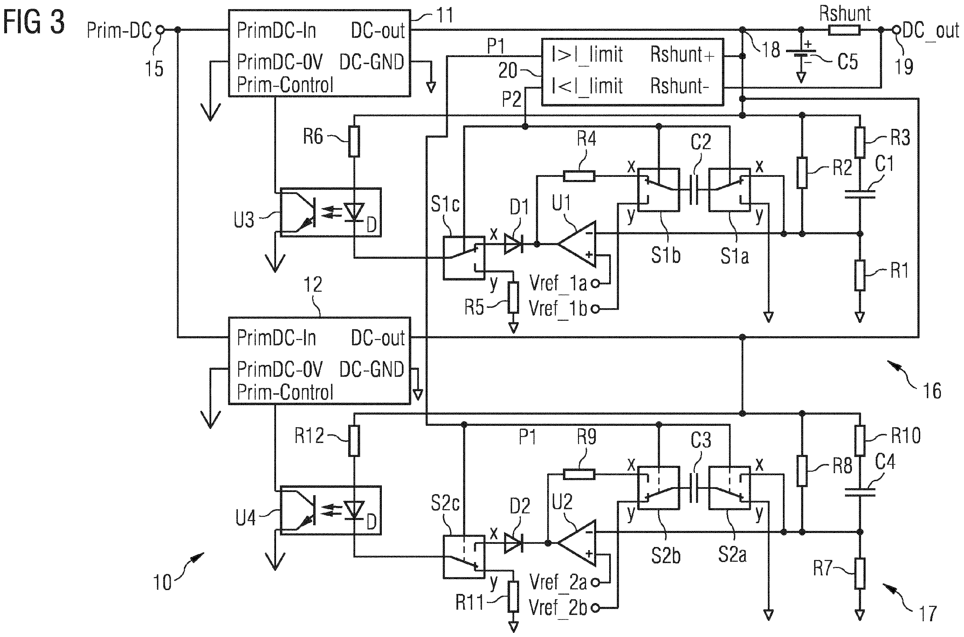

Figur 3 zeigt eine Netzteilanordnung 10 gemäß einer ersten Ausgestaltung der vorliegenden Erfindung. Die Netzteilanordnung 10 umfasst einen ersten Schaltwandler 11, insbesondere einen Hauptwandler mit einer Ausgangsleistung von beispielsweise 300 W, und einen ersten Regelkreis 16 für den ersten Schaltwandler 11. Die Netzteilanordnung 10 umfasst des Weiteren einen zweiten Schaltwandler 12, insbesondere einen Hilfswandler mit einer deutlich geringeren Ausgangsleistung von beispielsweise 20 W, und einen zweiten Regelkreis 17 für den zweiten Schaltwandler 12. Um den jeweils bestmöglichen Wirkungsgrad zu erzielen und eine gegenseitige Störung der Regelkreise 16 und 17 zu vermeiden, befindet sich zu jedem Zeitpunkt nur einer der Schaltwandler 11 und 12 im Betrieb. Der jeweils andere Schaltwandler 12 beziehungsweise 11 wird dagegen in einem Zustand mit möglichst geringer Energieaufnahme gehalten.

Im Ausführungsbeispiel werden der erste Schaltwandler 11 und der zweite Schaltwandler 12 von einem Eingang 15 mit einer gemeinsamen Versorgungsspannung Prim-DC versorgt. Dabei handelt es sich im Ausführungsbeispiel um eine gleichgerichtete Zwischenspannung. Die Zwischenspannung Prim-DC kann beispielsweise durch eine vorgelagerte, in der Figur 3 nicht dargestellte Gleichrichterschaltung aus einer Netzwechselspannung erzeugt werden. Der Ausgang DC-out des ersten Schaltwandlers 11 sowie der Ausgang DC-out des zweiten Schaltwandlers 12 sind an einem gemeinsamen Knotenpunkt 18 direkt miteinander gekoppelt. Insbesondere sind keine Einkoppeldioden oder sonstige zu einer signifikanten Verminderung des Wirkungsgrades der Netzteilanordnung 10 führende Komponenten zwischen den Schaltwandlern 11 und 12 und einem gemeinsamen Ausgang 19 vorgesehen. Die Höhe der Spannung an dem Knotenpunkt 18 wird mittels eines Stabilisierungselements in Form eines Speicherkondensators C5 stabilisiert. In der Figur 1 ist der Kondensator C5 als gesondertes Bauteil dargestellt. Alternativ kann es sich auch um ein in den ersten Schaltwandler 11 und/oder den zweiten Schaltwandler 12 integriertes Stabilisierungselement handeln. Die entweder von dem ersten Schaltwandler 11 oder dem zweiten Schaltwandler 12 an dem Knotenpunkt 18 bereitgestellte, geregelte Spannung wird über den gemeinsamen Ausgang 19 der Netzteilanordnung 10 an ein in der Figur 3 nicht dargestelltes elektronisches Gerät abgegeben. Insbesondere eignet sich die dargestellte Netzteilanordnung 10 zur Verwendung in einem Netzteil für einen Computer.

Zwischen dem Knotenpunkt 18 und dem gemeinsamen Ausgang 19 ist ein Messwiderstand Rshunt geschaltet. Der Widerstand Rshunt ist mit einem Stromvergleicher 20 verbunden, der ermitteln kann, ob der über den gemeinsamen Ausgang 19 abgegebene Strom I über oder unter einem vorbestimmten Grenzwert I_limit, beispielsweise einem maximalen Ausgangsstrom des zweiten Schaltwandlers 12, liegt. Liegt der momentane Strom I über dem Grenzwert I_limit, wird ein erstes Steuersignal P1 von dem Stromvergleicher 20 an drei Umschalter S2a, S2b und S2c übertragen. Liegt der momentan abgegebene Strom I dagegen unter dem Grenzwert I_limit, wird ein zweites Steuersignal P2 an drei Umschaltelemente S1a, S1b und S1c abgegeben. Die Ausgänge des Stromvergleichers 20 schalten im Ausführungsbeispiel invertiert synchron. Alternativ ist auch ein geringer Zeitversatz möglich, der einen sehr kurzzeitigen Parallelbetrieb der beiden Regelkreise 16 und 17 bewirkt. Dieser geringe Zeitversatz sollte deutlich unter der Nachregelzeit der Schaltwandler 11 und 12 liegen, und beträgt beispielsweise 10 ms. Eine solche Strommess- und Steuerschaltung ermöglicht das schnelle Bereitstellen der internen Steuersignale P1 und P2 unabhängig von dem versorgten Gerät. Somit ermöglicht die Schaltung eine schnelle Reaktion auf sekundärseitige Lastwechsel ohne eine entsprechende Vorwarnung durch das versorgte Gerät.

Im in der Figur 3 dargestellten Zustand ist das erste Steuersignal P1 aktiviert und das zweite Steuersignal P2 deaktiviert. Dies heißt, dass sich die Umschaltelemente S1a, S1b und S1c jeweils in einer Schalterstellung x und die Umschaltelemente S2a, S2b und S2c jeweils in einer Schalterstellung y befinden. In diesem Zustand, das heißt bei einer relativ hohen Ausgangsleistung, ist der erste Regelkreis 16 über die Umschaltelemente S1a, S1b und S1c geschlossen.

Bei dem ersten Regelkreis handelt es sich im Wesentlichen um einen rückgekoppelten Schaltverstärker, wie dieser bereits in der Figur 1 dargestellt ist. Über einen Spannungsteiler, umfassend Widerstände R1, R2, R3 und C1, wird die an dem Knotenpunkt 18 anliegende Ausgangsspannung über einen Operationsverstärker U1 mit einer vorgegebenen Referenzspannung Vref_1a verglichen. Ein Ausgang des Operationsverstärkers U1 wird über einen weiteren Widerstand R4 und einen Kondensator C2 zurück auf den negativen Eingang des Operationsverstärkers U1 gekoppelt. Die ausgangsseitig an dem Operationsverstärker U1 bereitgestellte Regelspannung wird über eine Schutzdiode D1, eine Sendeleuchtdiode eines Optokopplers U3 sowie einen Vorwiderstand R6 zur Ansteuerung eines Empfangstransistors des Optokopplers U3 verwendet, um eine gewünschte Steuerspannung Prim-Control an einem entsprechenden Steuereingang des ersten Schaltwandlers 11 bereitzustellen.

In dem dargestellten Regelkreis 16 bilden die Widerstände R1 und R2 im Falle einer stabilen Ausgangsspannung einen proportionalen Spannungsteiler zum Überwachen der Ausgangsspannung am Knotenpunkt 18 (P-Anteil des Reglers). Über den Kondensator C1 und den Widerstand R3, die parallel zu dem Widerstand R2 geschaltet sind, wird eine differenzielle Komponente des Regelkreises 16 implementiert, um eine vorauseilende Regelung zu ermöglichen (D-Anteil des Reglers). Über den Widerstand R4 und den Kondensator C2 in dem Rückkoppelglied wird eine Gegenkopplung und somit ein integrierender Anteil des Regelkreises 16 implementiert (I-Anteil des Reglers). Dabei dient der Kondensator C2 insbesondere zur Vorgabe einer zeitlichen Komponente für die Integration. Zusammengenommen handelt es sich bei dem Regelkreis 16 somit um einen PID-Regler.

Im Betrieb mit konstantem Laststrom lädt sich C1 auf die Spannung VC1 = DC-out - Vref_1a auf. Der Kondensator C2 lädt sich auf die Differenz des Reglerausgangs zur Reglereingangsspannung auf, also VC2 = VU1out - Vref_1a. Die Spannung, die dann im Betrieb an der Kathode der Sendeleuchtdiode des Optokopplers U3 anliegt, ist damit VD = Vref_1a + VC2 + VD1. Um diesen Regelzustand schlagartig aus dem Leerlauf des ersten Schaltwandlers 11 wiederherzustellen, muss C2 vorgeladen und dann in den Regelkreis 16 im geladenen Zustand hineingeschaltet werden. Alle anderen Spannungen sind dagegen konstant. Diese Vorladung erfolgt im abgeschalteten Zustand durch den zweiten Schaltwandler 12 (nicht dargestellt).

Soll nun der erste Schaltwandler 11 abgeschaltet werden, werden die Umschaltelemente S1a, S1b und S1c von Schalterstellung x auf Schalterstellung y gebracht. S1c bewirkt eine Erhöhung des Optokopplerstroms auf einen Wert, der den Ausgangsstrom des ersten Schaltwandlers 11 sofort auf null drosselt. Der Kondensator C2 wird mit Hilfe der Umschaltelemente S1a und S1b aus dem Regelkreis 16 abgeklemmt und zwischen einer voreingestellten Referenzspannung Vref_1b und Masse aufgeladen. Da der erste Schaltwandler 11 nur abgeschaltet wird, wenn der Stromvergleicher 20 einen niedrigen Ausgangsstrom I detektiert, erfolgt die Abschaltung z.B. bei I_limit. Solange der Strom I unter I_limit bleibt, bleibt der Kondensator C2 mit der Referenzspannung Vref_1b verbunden. Hierfür ist keine Zeitablaufsteuerung notwendig. Steigt der Strom I langsam oder schnell wieder über den Grenzwert I_limit an, wird C2 schlagartig mit der Spannung am mittleren Knoten des Spannungsteilers des Regelkreises 16 verbunden. Damit stellt sich schlagartig die richtige Regelspannung am Optokoppler des ersten Regelkreises 16 ein.

Wie in der Figur 3 zu erkennen, ist der Regelkreis 17 des zweiten Schaltwandlers 12 im Wesentlichen entsprechend zum Regelkreis 16 des ersten Schaltwandlers 11 aufgebaut. Auf eine erneute Beschreibung dessen Funktionalität wird daher an dieser Stelle weitgehend verzichtet.

Anders als der Regelkreis 16 ist der zweite Regelkreis 17 in dem dargestellten Zustand durch die Schaltelemente S2a, S2b und S2c unterbrochen. Dabei wird, wie oben bezüglich des ersten Regelkreises 16 beschrieben, durch die zwei Umschaltelemente S2a und S2b ein Kondensator C3, der die zeitbestimmende Konstante des integrativen Regelelements des zweiten Regelkreises 17 darstellt, fest zwischen eine Referenzspannung Vref_2b und ein Massepotential der Netzteilanordnung 10 geschaltet. Die Referenzspannung Vref_2b wird durch den jeweils aktiven Schaltwandler, das heißt im dargestellten Zustand durch den ersten Schaltwandler 11 bereitgestellt. Sie kann beispielsweise an dem Knotenpunkt 18 abgegriffen werden, so dass kein weiteres Schaltelement zu ihrer Umschaltung erforderlich ist (nicht dargestellt).

Durch die Umschaltung auf die Referenzspannung Vref_2b wird eine Entladung des Kondensators C3 vermieden. Gleichzeitig wird eine Sendeleuchtdiode eines Optokopplers U4 des zweiten Regelkreises 17 fest über einen Widerstand R11 mit einem Massepotential verbunden. Auf diese Weise wird durch einen Empfangstransistor des Optokopplers U4 ein vorbestimmtes Steuersignal Prim-Control an einem Steuereingang des zweiten Schaltwandlers 12 erzeugt, das zur Deaktivierung des zweiten Schaltwandlers 12 führt.

Durch die Umschaltung der Regelkreise 16 und 17, jeweils gegenläufig, in die Schalterstellung x oder die Schalterstellung y wird sichergestellt, dass jeweils nur einer der beiden Schaltwandler 11 oder 12 aktiv ist, um an dem Knotenpunkt 18 eine Betriebsspannung bereitzustellen. Der Regelkreis 17 oder 16 des jeweils anderen Schaltwandler 12 beziehungsweise 11 wird dagegen in einem Zustand gehalten, der einen schnellen Neustart des Schaltwandlers 12 beziehungsweise 11 gestattet. Insbesondere wird die ansonsten nötige Zeit zum Hochfahren eines Tastverhältnisses des Schaltwandlers 12 beziehungsweise 11 oder zum Anpassen einer Arbeitsfrequenz durch Nachregeln des Regelkreises 17 beziehungsweise 16 vermieden oder zumindest stark verkürzt.

Im beschriebenen Ausführungsbeispiel erfolgt die Umschaltung zwischen den beiden Schaltwandlern 11 oder 12 automatisch über den Stromvergleicher 20 durch Messung des Stroms zwischen dem Knotenpunkt 18 und dem gemeinsamen Ausgang 19 über den Messwiderstand Rshunt. Die sechs Umschaltelemente S1a, S1b, S1c, S2a, S2b und S2c sind in einen integrierten Baustein integriert, und können mit jeweils einem TTL-Pegel angesteuert werden. Der integrierte Baustein ist dazu eingerichtet, beliebige Spannungen und insbesondere auch die in den Regelkreisen 16 und 17 auftretenden Regelspannungen zu schalten. Beispielsweise handelt es sich um den integrierten Baustein CD4053B der Firma Texas Instruments.

Bei der Deaktivierung des entsprechenden Regelkreises 16 oder 17 durch Schalten der Umschalter in die Schalterstellung y bleibt die Spannung der in dem Regelkreis vorhandenen Kondensatoren C1 beziehungsweise C4 jeweils erhalten. Diese wird über den Knotenpunkt 18 vorgegeben. Die Ladung der Kondensatoren C2 und C3 wird wie oben beschrieben über die Referenzspannungen Vref_1b beziehungsweise Vref_2b vorgegeben. Die beschriebene Schaltung ermöglicht somit ein schnelles Umschalten zwischen den Regelkreisen 16 und 17, ohne dass die Kondensatoren C1 bis C4 in einer Umschaltphase umgeladen werden müssen, was zu einem kurzzeitigen Einbrechen der Spannung an dem jeweils zu aktivierendem Schaltwandler 11 beziehungsweise 12 führen würde.

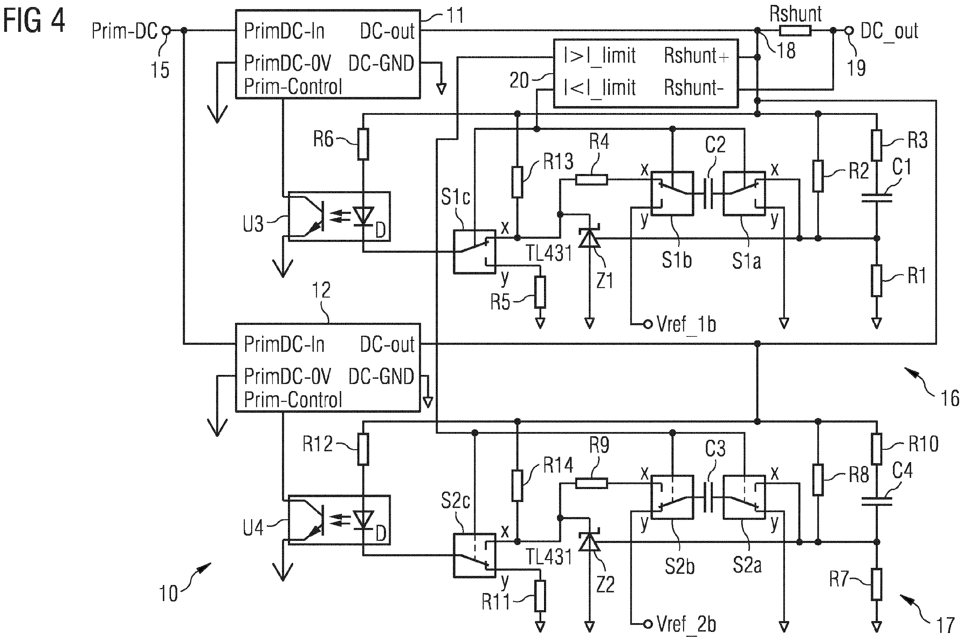

Figur 4 zeigt eine alternative Ausgestaltung der Erfindung. Dabei entsprechen die meisten Schaltungsteile den mit den gleichen Bezugszeichen versehenen Schaltungsteilen gemäß Figur 3. Auf eine erneute Beschreibung dieser Schaltungsteile wird daher an dieser Stelle verzichtet.

Abweichend davon umfasst die Ausgestaltung gemäß Figur 4 keinen gesonderten Speicherkondensator an dem Knotenpunkt 18. Zur Stabilisierung der Ausgangsspannung dienen hier bereits in der ersten und/oder zweiten Wandlerschaltung 11 bzw. 12 vorgesehenen Kondensatoren (nicht dargestellt).

Des Weiteren umfassen die Regelkreise 16 und 17 des ersten Schaltwandlers 11 beziehungsweise zweiten Schaltwandlers 12 jeweils eine spannungsgesteuerte, regelbare Zenerdiode Z1 beziehungsweise Z2 anstelle der Operationsverstärker U1 beziehungsweise U2. Beispielsweise handelt es sich bei den Zenerdioden Z1 und Z2 um Dioden vom Typ TL431. Durch Einsatz der regelbaren Z-Dioden Z1 und Z2 kann auf das Bereitstellen der Referenzspannungen Vref_1a beziehungsweise Vref_2a gemäß der Ausgestaltung nach Figur 3 verzichtet werden, weil diese schon intern in den TL431-Referenzdioden vorhanden sind. Ansonsten weist die Schaltung gemäß Figur 4 dieselben Vorteile auf wie die Schaltung gemäß Figur 3.

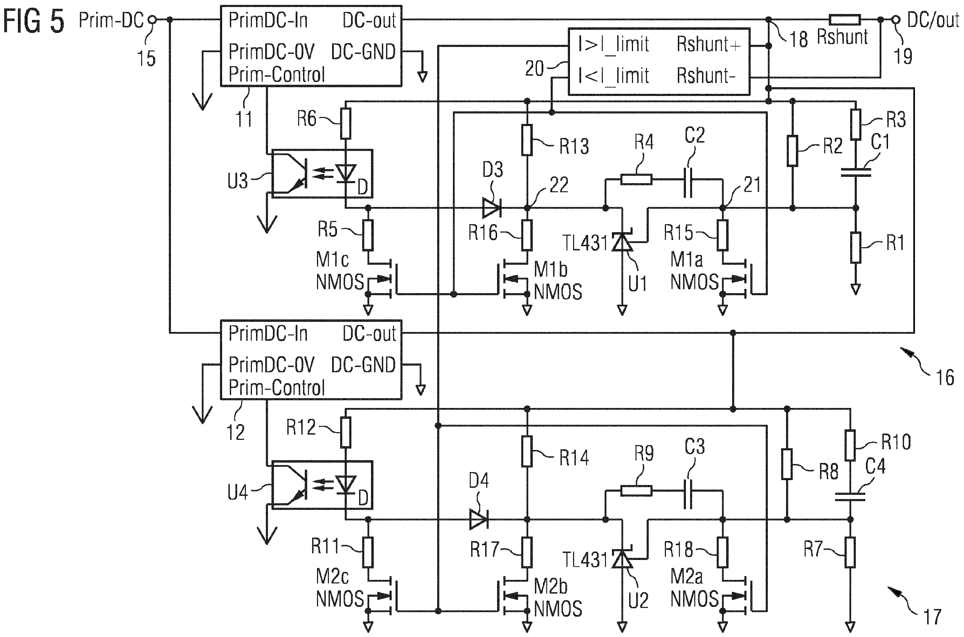

Figur 5 zeigt eine weitere alternative Ausgestaltung der Erfindung. Dabei entsprechen die meisten Schaltungsteile den mit den gleichen Bezugszeichen versehenen Schaltungsteilen gemäß Figur 4 beziehungsweise 3. Auf eine erneute Beschreibung dieser Schaltungsteile wird daher an dieser Stelle verzichtet.

Gegenüber der Schaltung gemäß Figur 4 wurden die elektronischen Umschalter S1a bis S2c durch Halbleiterschaltelemente M1a bis M2c ersetzt. Im Ausführungsbeispiel handelt es sich bei den Halbleiterschaltelementen M1a bis M2c insbesondere um NMOS-Kleinsignal-Transistoren. Soll nun der erste Schaltwandler 11 abgeschaltet werden, werden die Halbleiterschaltelemente M1a, M1b und M1c durch Anlegen des ersten Steuersignals P1 eingeschaltet. Das Halbleiterschaltelement M1c bewirkt eine Erhöhung des Stroms am Optokoppler U3 auf einen Wert, der den Ausgangsstrom des ersten Schaltwandlers 11 sofort auf null drosselt. Das Halbleiterschaltelement M1a senkt die Eingangsspannung an einem ersten internen Knoten 21 an einem Mittelabgriff des durch die Wiederstände R1 und R2 gebildeten Spannungsteilers über den Widerstand R15 etwas unter die Nenneingangsspannung der regelbaren Z-Diode Z1 ab, also z.B. von 2,5V auf 2,3V. Dadurch ist sichergestellt, dass die Kathoden-Anodenstrecke der Z-Diode Z1 hochohmig wird. Die Spannung, die sich dann an einem zweiten internen Knoten 22 des ersten Regelkreises 16 einstellt, wird nun von dem Halbleiterschaltelement M1b in Reihe mit dem Widerstand R16 bestimmt, die zusammen mit dem Widerstand R13 einen weiteren Spannungsteiler für die geregelte Ausgangsspannung DC-out bilden. Der Widerstand R16 wird dabei so eingestellt, dass sich die korrekte Spannung am Kondensator C2 einstellt, die bei einem erneuten Schnellstart des ersten Schaltwandler 11 nötig ist. Die Diode D3 dient dabei dazu, die Reglspannung am zweiteren inneren Knoten 22 unabhängig von der über den Widerstand R5 eingestellten Spannung am Optokoppler U3 einstellen zu können. Der zweite Regelkreis 17 des zweiten Schaltwandlers 12 ist entsprechend aufgebaut.

Wie oben beschrieben können bei der Variante der Schaltung gemäß Figur 5 die Umschalter S1a bis S2c durch preisgünstigere Kleinsignal-MOSFETs ersetzt werden. Zudem entfallen in der offenbarten Schaltung die Referenzspannungen Vref_1b und Vref_2b, so dass sich insgesamt ein einfacherer Schaltungsaufbau ergibt.

In den beschriebenen Ausgestaltungen sind die vorgegebenen Referenzspannungen Vref_1b und Vref_2b so eingestellt, dass sie den typischen Regelspannungen der Regelkreise 16 beziehungsweise 17 bei einem Ausgangsstrom I nahe des Grenzwerts I_limit zum Umschalten von dem ersten Schaltwandler 11 auf den zweiten Schaltwandler 12 entsprechen. Alternativ zu fest voreingestellten Referenzspannungen Vref_1b und Vref_2b können die zu diesem Zeitpunkt an den Kondensatoren C2 beziehungsweise C3 anliegenden Spannungen auch über eine sogenannte Abtast-Halteschaltung (Englisch: sample and hold circuit) gehalten werden, um den Ladezustand der Kondensatoren C2 beziehungsweise C3 in Zeiten der Inaktivität zu sichern.

Abweichend von den Ausgestaltungen gemäß Figur 3 und 4 kann der Stromvergleicher 20 so ausgestaltet werden, dass sein Schaltverhalten einen Hystereseeffekt besitzt. Dies bedeutet im dargestellten Anwendungsfall, dass der Umschaltzeitpunkt bei sinkendem beziehungsweise steigendem Ausgangsstrom I unterschiedlich ist. Beispielsweise kann das Steuersignal P1 sofort aktiviert werden, wenn ein momentaner Ausgangsstrom I über einen vorgegebenen Grenzwert I_limit ansteigt, wie bezüglich der Figur 3 beschrieben. Umgekehrt kann bei einem Abfallen der Ausgangsleistung das Steuersignal P2 erst bei einem Abfallen des Ausgangsstroms I unter einen Grenzwert I_limit - I_hysterese umgeschaltet werden.

Anstelle unterschiedlicher Grenzwerte für den Fall eines ansteigenden und abfallenden Ausgangsstroms I kann der Stromkomparator 20 die entsprechenden Steuersignale P1 oder P2 auch erst nach Ablauf einer vorbestimmten Verzögerungszeit nach Unterschreiten eines einzelnen vorbestimmten Grenzwertes I_limit abgeben. Auf diese Weise wird insbesondere ein häufiges Umschalten zwischen dem ersten Schaltwandler 11 und dem zweiten Schaltwandler 12 vermieden, wenn die über den gemeinsamen Ausgang 19 abgegebene Ausgangsleistung nur kurzzeitig abfällt. Erst wenn die Energieaufnahme des versorgten Geräts langfristig unter dem Schwellwert I_limit bleibt, beispielsweise weil das Gerät einen Energiesparzustand eingenommen hat, findet ein Lastwechsel von dem ersten Schaltwandler 11 auf den zweiten Schaltwandler 12 statt. Eine Verzögerung nach dem Überschreiten des vorbestimmten Grenzwerts I_limit ist in der Regel nicht sinnvoll, da sonst die Gefahr besteht, dass der leistungsschwächere Schaltwandler 12 wegen Überlast abschaltet.

In einer weiteren, nicht dargestellten Ausgestaltung der Erfindung umfasst eine Netzteilanordnung mehr als zwei Schaltwandler. Beispielsweise kann eine Netzteilanordnung einen ersten Schaltwandler für einen Bereitschaftszustand, einen zweiten Schaltwandler für einen Leerlaufzustand und einen dritten Schaltwandler für einen Volllastzustand zum Betreiben eines Computersystems aufweisen. In diesem Fall ist der Stromvergleicher dazu eingerichtet, einen aktuellen Ausgangsstrom I mit mehreren unterschiedlichen Grenzwerten zum Umschalten zwischen dem ersten und zweiten beziehungsweise zweiten und dritten Schaltwandler zu vergleichen. Selbstverständlich können auch noch weitere Schaltwandler vorgesehen sein, um den Betrieb des jeweils aktiven Schaltwandlers im Bereich seiner optimalen Energieeffizienz sicherzustellen.

### Bezugszeichenliste

- 10: Netzteilanordnung
- 11: erster Schaltwandler
- 12: zweiter Schaltwandler
- 13: erster Ausgang
- 14: zweiter Ausgang
- 15: Eingang
- 16: erster Regelkreis
- 17: zweiter Regelkreis
- 18: Knotenpunkt
- 19: gemeinsamer Ausgang
- 20: Stromvergleicher
- 21: erster interner Knoten
- 22: zweiter interner Knoten

- C1 bis C5: Kondensator
- D1 bis D4: Diode
- M1a, M1b, M1c, M2a, M2b, M2c: Halbleiterschaltelement
- R1 bis R18: Widerstand
- Rshunt: Strommesswiderstand
- S1a, S1b, S1c, S2a, S2b, S2c: Umschaltelement
- U1, U2: Operationsverstärker
- U3, U4: Optokoppler
- Z1, Z2: regelbare Z-Diode

- Prim-Control: Steuersignal
- Prim-DC: Eingangsspannung
- DC-out1, DC-out2: Ausgangsspannung
- I: Ausgangsstrom
- I_limit: Grenzwert
- P1, P2: Steuersignal
- x, y: Schalterstellung

## Patentansprüche

1. Netzteilanordnung (10) für ein elektronisches Gerät, umfassend:
- einen ersten Schaltwandler (11) mit einem ersten Regelkreis (16) zum Bereitstellen einer geregelten Ausgangsspannung (DC-out) an einem Knotenpunkt (18);
- einen zweiten Schaltwandler (12) mit einem zweiten Regelkreis (17) zum alternativen Bereitstellen der geregelten Ausgangsspannung (DC-out) an dem Knotenpunkt (18); und
- eine mit dem ersten Regelkreis (16) und dem zweitem Regelkreis (17) verbundene Steuerschaltung, wobei
- der erste Regelkreis (16) ein Regelelement mit einem Rückkoppelpfad umfassend wenigstens einen als zeitbestimmendes Element verwendeten Kondensator (C2) aufweist,
- der Rückkoppelpfad einen Ausgang des Regelelements über den wenigstens einen Kondensator auf einen Eingang des Regelelements koppelt,
- die Steuerschaltung dazu eingerichtet ist, bei einem Umschalten der Stromversorgung von dem ersten Schaltwandler (11) auf den zweiten Schaltwandler (12), einen vorbestimmten Regelzustand des ersten Regelkreises (16) einzustellen, indem eine Ladung des wenigstens einen Kondensators (C2) gehalten wird, und den ersten Schaltwandler (11) zu deaktivieren und, bei einem Umschalten der Stromversorgung von dem zweiten Schaltwandler (12) auf den ersten Schaltwandler (11), den ersten Schaltwandler (11) unter Verwendung des vorbestimmten Regelzustands zu reaktivieren.

2. Netzteilanordnung (10) nach Anspruch 1, wobei
- der zweite Regelkreis (17) ein weiteres Regelelement mit einem weiteren Rückkoppelpfad umfassend wenigstens einen weiteren als zeitbestimmendes Element verwendeten Kondensator (C3) aufweist,
- der weitere Rückkoppelpfad einen Ausgang des weiteren Regelelements über den wenigstens einen weiteren Kondensator (C3) auf einen Eingang des weiteren Regelelements koppelt,
- die Steuerschaltung des Weiteren dazu eingerichtet ist, bei einem Umschalten der Stromversorgung von dem zweiten Schaltwandler (12) auf den ersten Schaltwandler (11), einen vorbestimmten Regelzustand des zweiten Regelkreises (17) einzustellen, indem eine Ladung des wenigstens einen weiteren Kondensators (C3) gehalten wird, und den zweiten Schaltwandler (12) nachfolgend zu deaktivieren und, bei einem Umschalten der Stromversorgung von dem ersten Schaltwandler (11) auf den zweiten Schaltwandler (12), den zweiten Schaltwandler (12) unter Verwendung des vorbestimmten Regelzustands zu reaktivieren.

3. Netzteilanordnung (10) nach Anspruch 1 oder 2, wobei die Steuerschaltung eine Strommessschaltung zum Vergleich eines Ausgangsstroms (I) an einem Ausgang (19) der Netzteilanordnung (10) zum Bereitstellen der geregelten Ausgangsspannung (DC-out) mit wenigstens einem vorbestimmten Grenzwert (I_limit) umfasst, eine erste Nennausgangsleistung des ersten Schaltwandlers (11) größer ist als eine zweite Nennausgangsleistung des zweiten Schaltwandlers (12) und die Steuerschaltung dazu eingerichtet ist, nach einem Unterschreiten des Ausgangsstroms (I) unter den vorbestimmten Grenzwert (I_limit) die Stromversorgung von dem ersten Schaltwandler (11) auf den zweiten Schaltwandler (12) umzuschalten und unmittelbar nach einem Überschreiten des Ausgangsstroms (I) über den vorbestimmten Grenzwert (I_limit) die Stromversorgung von dem zweiten Schaltwandler (12) auf den ersten Schaltwandler (11) umzuschalten.

4. Netzteilanordnung (10) nach Anspruch 3, bei dem die Steuerschaltung dazu eingerichtet ist, die Stromversorgung unmittelbar nach Erkennen eines Unterschreitens des vorbestimmten Grenzwertes (I_limit) von dem ersten Schaltwandler (11) auf den zweiten Schaltwandler (12) umzuschalten.

5. Netzteilanordnung (10) nach Anspruch 3, bei dem die Steuerschaltung dazu eingerichtet ist, die Stromversorgung nach einer vorbestimmten Zeitspanne nach dem Erkennen eines Unterschreitens des vorbestimmten Grenzwertes (I_limit) oder nach Unterschreiten eines zweiten vorbestimmten Grenzwertes, der kleiner als der erste vorbestimmte Grenzwert (I_limit) ist, von dem ersten Schaltwandler (11) auf den zweiten Schaltwandler (12) umzuschalten.

6. Netzteilanordnung (10) nach einem der Ansprüche 1 bis 5, bei dem die Steuerschaltung wenigstens ein erstes Umschaltelement (Sla, S1b, S2a, S2b) umfasst, wobei das wenigstens eine erste Umschaltelement (Sla, S1b, S2a, S2b) zum wahlweisen Verbinden des zeitbestimmenden Elements (C2, C3) mit wenigstens einem Anschluss des Regelelements oder einer vorbestimmten Referenzspannung (Vref_1b, Vref_2b) eingerichtet ist.

7. Netzteilanordnung (10) nach einem der Ansprüche 1 bis 6, bei dem die Steuerschaltung wenigstens ein zweites Umschaltelement (S1c, S2c) umfasst, wobei das zweite Umschaltelement (S1c, S2c) zum wahlweisen Verbinden eines Steuereingangs des ersten Schaltwandlers (11) und/oder des zweiten Schaltwandlers (12) mit einem Ausgang des Regelelements oder einem vorbestimmten Spannungspotential zum Deaktivieren des ersten Schaltwandlers (11) beziehungsweise des zweiten Schaltwandlers (12) eingerichtet ist.

8. Netzteilanordnung (10) nach einem der Ansprüche 1 bis 5, bei dem die Steuerschaltung wenigstens ein erstes Halbleiterschaltelement (M1a, M2a) umfasst, wobei das wenigstens eine erste Halbleiterschaltelement (M1a, M2a) zum Absenken einer Regelspannung an einem ersten internen Knoten (21) des ersten Regelkreises (16) und/oder des zweiten Regelkreises (17) eingerichtet ist.

9. Netzteilanordnung (10) nach einem der Ansprüche 1 bis 5 oder 8, bei dem die Steuerschaltung wenigstens ein zweites Halbleiterschaltelement (M1b, M2b) umfasst, wobei das wenigstens eine zweite Halbleiterschaltelement (M1b, M2b) zum Einstellen einer Regelspannung an einem zweiten internen Knoten (22) des ersten Regelkreises (16) und/oder des zweiten Regelkreises (17) eingerichtet ist.

10. Netzteilanordnung (10) nach einem der Ansprüche 1 bis 5, 8 oder 9, bei dem die Steuerschaltung wenigstens ein drittes Halbleiterschaltelement (M1c, M2c) umfasst, wobei das wenigstens eine dritte Halbleiterschaltelement (M1c, M2c) zum wahlweisen Verbinden eines Steuereingangs des ersten Schaltwandlers (11) und/oder des zweiten Schaltwandlers (12) mit einem vorbestimmten Spannungspotential zum Deaktivieren des ersten Schaltwandlers (11) beziehungsweise des zweiten Schaltwandlers (12) eingerichtet ist.

11. Netzteilanordnung (10) nach einem der Ansprüche 8 bis 10, bei dem das erste, zweite und/oder dritte Halbleiterschaltelement als Kleinsignal-Transistor, insbesondere als Kleinsignal-MOSFET, ausgestaltet ist.

12. Netzteilanordnung nach Anspruch 7 oder 10, wobei der Steuereingang des ersten Schaltwandlers (11) und/oder des zweiten Schaltwandlers (12) über einen Optokoppler (U3, U4) mit dem Ausgang des Regelelements verbunden ist.

13. Netzteilanordnung (10) nach einem der Ansprüche 1 bis 12, bei dem das Regelelement wenigstens einen gegengekoppelten Operationsverstärker (U1, U2) oder wenigstens eine gegengekoppelte, regelbare Zenerdiode (Z1, Z2) umfasst.

14. Netzteilanordnung (10) nach einem der Ansprüche 1 bis 13, weiter umfassend wenigstens ein mit dem Knotenpunkt (18) verbundenes Stabilisierungselement, insbesondere ein Speicherkondensator (C5), zum Stabilisieren der Spannung an dem Knotenpunkt (18) bei ausgangsseitigen Laständerungen.

## Claims

1. Power supply unit arrangement (10) for an electronic device, comprising:
- a first switching converter (11) with a first control loop (16) for providing a controlled output voltage (DC-out) at a node (18);
- a second switching converter (12) with a second control loop (17) for alternatively providing the controlled output voltage (DC-out) at the node (18); and
- an open-loop control circuit connected to the first control loop (16) and the second control loop (17), wherein
- the first control loop (16) comprises a closed-loop control element having a feedback path comprising at least one capacitor (C2) used as a time-determining element,
- the feedback path couples an output of the closed-loop control element to an input of the closed-loop control element via the at least one capacitor,
- the open-loop control circuit is designed, upon a changeover of the current supply from the first switching converter (11) to the second switching converter (12), to set a predetermined control state of the first control loop (16) by holding a charge of the at least one capacitor (C2) and to deactivate the first switching converter (11) and, upon a changeover of the current supply from the second switching converter (12) to the first switching converter (11), to reactivate the first switching converter (11) using the predetermined control state.

2. Power supply unit arrangement (10) according to Claim 1, wherein
- the second control loop (17) comprises a further closed-loop control element having a further feedback path comprising at least one further capacitor (C3) used as a time-determining element,
- the further feedback path couples an output of the further closed-loop control element to an input of the further closed-loop control element via the at least one further capacitor (C3),
- the open-loop control circuit is furthermore designed, upon a changeover of the current supply from the second switching converter (12) to the first switching converter (11), to set a predetermined control state of the second control loop (17) by holding a charge of the at least one further capacitor (C3) and subsequently to deactivate the second switching converter (12) and, upon a changeover of the current supply from the first switching converter (11) to the second switching converter (12), to reactivate the second switching converter (12) using the predetermined control state.

3. Power supply unit arrangement (10) according to Claim 1 or 2, wherein the open-loop control circuit comprises a current measuring circuit for comparing an output current (I) at an output (19) of the power supply unit arrangement (10) for providing the controlled output voltage (DC-out) with at least one predetermined limit value (I_limit), a first rated output power of the first switching converter (11) is greater than a second rated output power of the second switching converter (12) and the open-loop control circuit is designed, after the output current (I) falls below the predetermined limit value (I_limit), to change over the current supply from the first switching converter (11) to the second switching converter (12) and, directly after the output current (I) exceeds the predetermined limit value (I_limit), to change over the current supply from the second switching converter (12) to the first switching converter (11).

4. Power supply unit arrangement (10) according to Claim 3, wherein the open-loop control circuit is designed to change over the current supply from the first switching converter (11) to the second switching converter (12) immediately after identification of the predetermined limit value (I_limit) having been undershot.

5. Power supply unit arrangement (10) according to Claim 3, wherein the open-loop control circuit is designed to change over the current supply from the first switching converter (11) to the second switching converter (12) after a predetermined time period after identification of the predetermined limit value (I_limit) having been undershot or after a second predetermined limit value has been undershot, which is less than the first predetermined limit value (I _limit).

6. Power supply unit arrangement (10) according to any of Claims 1 to 5, wherein the open-loop control circuit comprises at least one first changeover element (S1a, S1b, S2a, S2b), wherein the at least one first changeover element (S1a, S1b, S2a, S2b) is designed for optionally connecting the time-determining element (C2, C3) to at least one terminal of the closed-loop control element or a predetermined reference voltage (Vref_1b, Vref_2b).

7. Power supply unit arrangement (10) according to any of Claims 1 to 6, wherein the open-loop control circuit comprises at least one second changeover element (S1c, S2c), wherein the second changeover element (S1c, S2c) is designed for optionally connecting a control input of the first switching converter (11) and/or of the second switching converter (12) to an output of the closed-loop control element or a predetermined voltage potential for deactivating the first switching converter (11) and/or the second switching converter (12).

8. Power supply unit arrangement (10) according to any of Claims 1 to 5, wherein the open-loop control circuit comprises at least one first semiconductor switching element (M1a, M2a), wherein the at least one first semiconductor switching element (M1a, M2a) is designed for reducing a control voltage at a first internal node (21) of the first control loop (16) and/or of the second control loop (17).

9. Power supply unit arrangement (10) according to any of Claims 1 to 5 or 8, wherein the open-loop control circuit comprises at least one second semiconductor switching element (M1b, M2b), wherein the at least one second semiconductor switching element (M1b, M2b) is designed for setting a control voltage at a second internal node (22) of the first control loop (16) and/or of the second control loop (17).

10. Power supply unit arrangement (10) according to any of Claims 1 to 5, 8 or 9, wherein the open-loop control circuit comprises at least one third semiconductor switching element (M1c, M2c), wherein the at least one third semiconductor switching element (M1c, M2c) is designed for optionally connecting a control input of the first switching converter (11) and/or of the second switching converter (12) to a predetermined voltage potential for deactivating the first switching converter (11) and/or the second switching converter (12).

11. Power supply unit arrangement (10) according to any of Claims 8 to 10, wherein the first, second and/or third semiconductor switching element are/is configured as small-signal transistor, in particular as small-signal MOSFET.

12. Power supply unit arrangement according to Claim 7 or 10, wherein the control input of the first switching converter (11) and/or of the second switching converter (12) is connected to the output of the closed-loop control element via an optocoupler (U3, U4).

13. Power supply unit arrangement (10) according to any of Claims 1 to 12, wherein the closed-loop control element comprises at least one negative feedback operational amplifier (U1, U2) or at least one negative feedback, controllable zener diode (Z1, Z2).

14. Power supply unit arrangement (10) according to any of Claims 1 to 13, further comprising at least one stabilization element connected to the node (18), in particular a storage capacitor (C5), for stabilizing the voltage at the node (18) in the case of output-side load changes.

## Revendications

1. Ensemble bloc d'alimentation électrique (10) pour un appareil électronique, comprenant :
- un premier convertisseur de commutation (11) doté d'un premier circuit de réglage (16) pour la mise à disposition d'une tension de sortie régulée (DC-out) au niveau d'un point nodal (18) ;
- un second convertisseur de commutation (12) doté d'un second circuit de réglage (17) pour la mise à disposition alternative de la tension de sortie régulée (DC-out) au niveau du point nodal (18) ; et
- un circuit de commande connecté au premier circuit de réglage (16) et au second circuit de réglage (17),
- le premier circuit de réglage (16) présentant un élément de réglage doté d'une piste de rétroaction comprenant au moins un condensateur (C2) utilisé comme élément de détermination temporelle,
- la piste de rétroaction couplant une sortie de l'élément de réglage par l'intermédiaire de l'au moins un condensateur à une entrée de l'élément de réglage,
- le circuit de commande étant conçu pour, en cas d'une commutation de l'alimentation électrique du premier convertisseur de commutation (11) sur le second convertisseur de commutation (12), établir un état de réglage prédéfini du premier circuit de réglage (16) par le fait qu'une charge de l'au moins un condensateur (C2) est maintenue, et pour désactiver le premier convertisseur de commutation (11) et, en cas d'une commutation de l'alimentation électrique du second convertisseur de commutation (12) sur le premier convertisseur de commutation (11), réactiver le premier convertisseur de commutation (11) en utilisant l'état de réglage prédéfini.

2. Ensemble bloc d'alimentation électrique (10) selon la revendication 1, dans lequel
- le second circuit de réglage (17) présente un autre élément de réglage doté d'une autre piste de rétroaction comprenant au moins un autre condensateur (C3) utilisé comme élément de détermination temporelle,
- l'autre piste de rétroaction couple une sortie de l'autre élément de réglage par l'intermédiaire de l'au moins un autre condensateur (C3) à une entrée de l'autre élément de réglage,
- le circuit de commande est en outre conçu pour, en cas d'une commutation de l'alimentation électrique du second convertisseur de commutation (12) sur le premier convertisseur de commutation (11), établir un état de réglage prédéfini du second circuit de réglage (17) par le fait qu'une charge de l'au moins un autre condensateur (C3) est maintenue et pour désactiver ensuite le second convertisseur de commutation (12) et, en cas d'une commutation de l'alimentation électrique du premier convertisseur de commutation (11) sur le second convertisseur de commutation (12), réactiver le second convertisseur de commutation (12) en utilisant l'état de réglage prédéfini.

3. Ensemble bloc d'alimentation électrique (10) selon la revendication 1 ou 2, le circuit de commande comprenant un circuit de mesure de courant pour comparer un courant de sortie (I) au niveau d'une sortie (19) de l'ensemble bloc d'alimentation électrique (10) pour la mise à disposition de la tension de sortie régulée (DC-out) avec au moins une valeur limite prédéfinie (I_limit), une première puissance de sortie nominale du premier convertisseur de commutation (11) étant supérieure à une seconde puissance de sortie nominale du second convertisseur de commutation (12) et le circuit de commande étant conçu pour, après un sous-dépassement du courant de sortie (I) en deçà de la valeur limite prédéfinie (I_limit), commuter l'alimentation électrique du premier convertisseur de commutation (11) sur le second convertisseur de commutation (12) et, immédiatement après un dépassement du courant de sortie (I) au-delà de la valeur limite prédéfinie (I_limit), commuter l'alimentation électrique du second convertisseur de commutation (12) sur le premier convertisseur de commutation (11).

4. Ensemble bloc d'alimentation électrique (10) selon la revendication 3, dans lequel le circuit de commande est conçu pour commuter l'alimentation électrique immédiatement après détection d'un sous-dépassement de la valeur limite prédéfinie (I_limit) du premier convertisseur de commutation (11) sur le second convertisseur de commutation (12).

5. Ensemble bloc d'alimentation électrique (10) selon la revendication 3, dans lequel le circuit de commande est conçu pour commuter l'alimentation électrique, après un laps de temps prédéfini après la détection d'un sous-dépassement de la valeur limite prédéfinie (I_limit) ou après un sous-dépassement d'une seconde valeur limite prédéfinie qui est inférieure à la première valeur limite prédéfinie (I_limit), du premier convertisseur de commutation (11) sur le second convertisseur de commutation (12).

6. Ensemble bloc d'alimentation électrique (10) selon une des revendications 1 à 5, dans lequel le circuit de commande comprend au moins un premier élément de commutation (Sla, S1b, S2a, S2b), l'au moins un premier élément de commutation (Sla, S1b, S2a, S2b) étant conçu pour la connexion au choix de l'élément de détermination temporelle (C2, C3) à l'au moins un raccordement de l'élément de réglage ou à une tension de référence prédéfinie (Vref_1b, Vref_2b).

7. Ensemble bloc d'alimentation électrique (10) selon une des revendications 1 à 6, dans lequel le circuit de commande comprend au moins un second élément de commutation (S1c, S2c), le second élément de commutation (S1c, S2c) étant conçu pour connecter au choix une entrée de commande du premier convertisseur de commutation (11) et/ou du second convertisseur de commutation (12) à une sortie de l'élément de réglage ou à un potentiel de tension prédéfini pour désactiver le premier convertisseur de commutation (11) ou le second convertisseur de commutation (12).

8. Ensemble bloc d'alimentation électrique (10) selon une des revendications 1 à 5, dans lequel le circuit de commande comprend au moins un premier élément de commutation semi-conducteur (M1a, M2a), l'au moins un premier élément de commutation semi-conducteur (M1a, M2a) étant conçu pour faire baisser une tension de réglage au niveau d'un premier noeud interne (21) du premier circuit de réglage (16) et/ou du second circuit de réglage (17).

9. Ensemble bloc d'alimentation électrique (10) selon une des revendications 1 à 5 ou 8, dans lequel le circuit de commande comprend au moins un deuxième élément de commutation semi-conducteur (M1b, M2b), l'au moins un deuxième élément de commutation semi-conducteur (M1b, M2b) étant conçu pour régler une tension de réglage au niveau d'un second noeud interne (22) du premier circuit de réglage (16) et/ou du second circuit de réglage (17).

10. Ensemble bloc d'alimentation électrique (10) selon une des revendications 1 à 5, 8 ou 9, dans lequel le circuit de commande comprend au moins un troisième élément de commutation semi-conducteur (M1c, M2c), l'au moins un troisième élément de commutation semi-conducteur (M1c, M2c) étant conçu pour connecter au choix une entrée de commande du premier convertisseur de commutation (11) et/ou du second convertisseur de commutation (12) à un potentiel de tension prédéfini pour désactiver le premier convertisseur de commutation (11) et le second convertisseur de commutation (12).

11. Ensemble bloc d'alimentation électrique (10) selon une des revendications 8 à 10, dans lequel le premier, deuxième et/ou troisième élément de commutation semi-conducteur est réalisé sous forme d'un transistor à faible signal, en particulier un MOSFET à faible signal.

12. Ensemble bloc d'alimentation électrique selon la revendication 7 ou 10, dans lequel l'entrée de commande du premier convertisseur de commutation (11) et/ou du second convertisseur de commutation (12) est connectée par un optocoupleur (U3, U4) à la sortie de l'élément de réglage.

13. Ensemble bloc d'alimentation électrique (10) selon une des revendications 1 à 12, dans lequel l'élément de réglage comprend au moins un amplificateur d'opérations contre-couplé (U1, U2) ou au moins une diode Zener réglable contre-couplée (Z1, Z2).

14. Ensemble bloc d'alimentation électrique (10) selon une des revendications 1 à 13, comprenant en outre au moins un élément de stabilisation connecté au point nodal (18), en particulier un condensateur accumulateur (C5) pour stabiliser la tension au point nodal (18) dans le cas de changements de charge au niveau de la sortie.
